# EUROPEAN PATENT SPECIFICATION

(11) **EP 0 799 264 B1**
(45) Date of publication and mention of the grant of the patent: **22.07.1998**
(21) Application number: 95942737.8
(22) Date of filing: 20.12.1995
(51) Int. Cl.: C08G 59/12, C08L 63/00, C08L 71/02, C08G 65/32

(54) **EPOXY-FUNCTIONAL POLYETHERS**
EPOXYPOLYETHER
POLYETHERS A FONCTIONNALITE EPOXY

(30) Priority: 21.12.1994 US 361084
(43) Date of publication of application: 08.10.1997
(73) Proprietor: SHELL INTERNATIONALE RESEARCH MAATSCHAPPIJ B.V., 2596 HR Den Haag (NL)
(72) Inventor: ELMORE, Jimmy, D., Houston, TX 77002 (US); FRIED, Herbert, Elliott, Owings Mills, MD 21117-1032 (US); STARK, Charles, John, Houston, TX 77095 (US)
(86) International application number: EP9505158
(87) International publication number: WO9619515

(56) References cited:
- EP-A- 0 618 245
- CH-A- 410 431
- CH-A- 454 455
- DE-C- 3 202 299
- GB-A- 2 113 690

## Description

This invention relates to epoxy-functional polyethers as emulsifiers and/or reactive diluents in aqueous epoxy resin compositions.

There are ever increasing demands for compounds useful in epoxy resin applications, for example as emulsifiers or diluents, as epoxy resins are required to perform under ever more specific and demanding conditions. In this respect reference is especially made to aqueous based epoxy resin compositions, which are more environment-friendly than the classic organic solvent based systems. Such aqueous based systems require specific emulsifiers and/or diluents which have to be compatible with the aqueous phase as well as with the orgnanic phase. It is desirable for a compound to have epoxy functional groups to increase the compatibility with the cured epoxy matrix. Further, it is desirable to be able to provide such compounds with predefined hydrophilic and hydrophobic segments depending on the desired applications.

It is an object of the present invention to provide compositions comprising epoxy-functional polyethers as emulsifiers and/or reactive diluents for aqueous epoxy resin compositions. It is another object of the present invention to provide a process to prepare epoxy-functional polyethers. Another object of the invention are the novel esters themselves.

It has been found that compositions comprising certain epoxy-functional polyethers can be made, which polyethers are very suitable for use as emulsifiers and/or reactive diluents in e.g. aqueous epoxy resin compositions which are suitable for coating purposes, by reaction of certain carboxylic acids and epoxy resins having more than one epoxy group.

Thus, the present invention relates to aqueous epoxy resin compositions comprising an epoxy resin and as emulsifier and/or reactive diluent a product produced by reacting (a) a carboxylic acid having the formula: 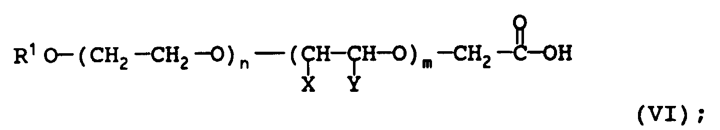 wherein R¹ is a C₁-C₁₅ alkyl, aryl or alkylaryl and X and Y are independently a hydrogen, methyl or ethyl group with the provision that if X is methyl or ethyl, Y is hydrogen or if Y is methyl or ethyl, X is hydrogen and n+m is a real number from about 4 to about 450 and (b) an epoxy resin having a functionality of at least about 1.5 epoxide group per molecule in a carboxylic acid to epoxy resin mole ratio of from 1:1 to 1:500.

In the above formula n+m+o is preferably from 6 to 200.

The hydrophilic carboxylic acid can be produced by oxidation of a polyethylene glycol monoalkylether, polypropylene glycol monoalkyl ether, polybutylene glycol monoalkylether or a monoalkylether of a block copolymer of ethylene oxide and propylene oxide or butylene oxide ("polyalkylene glycol"). Preferably the polyalkylene glycol has a formula: 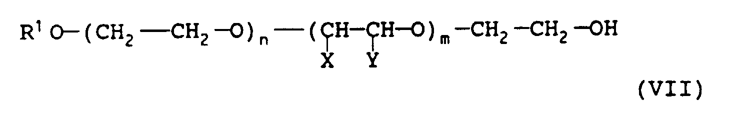 wherein R¹ is a C₁-C₁₅ alkyl, aryl or alkylaryl group, preferably C₁-C₄ alkyl or nonylphenyl, most preferably a methyl and n is a positive real number from 4, preferably from 10, most preferably from 20, to 450, preferably to 400. The number of carbon in R and the number of n and m are preferably balanced to obtain a hydrophilic composition. For HLB control R¹ preferably has less carbon numbers for lower values of n+m. Polyalkylene glycols generally contain a distribution of compounds with a varying number of oxyethylene units, n and oxypropylene or oxybutylene units, m. Generally, the quoted number of units is the whole number closest to the statistical average, and the peak of the distribution. Positive real number as used herein refers to a number which is positive and includes zero, integers and fractions of integers.

The carboxylic acids can be produced by oxidation of polyalkylene glycol monoalkylethers including, but not limited to, the processes described in U.S. Patent No. 5,250,727. Generally, oxygen is added to the polyalkylene glycol monoalkylether in the presence of a free radical (e.g., 2,2,6,6-tetramethyl-1-piper-idinyloxy) and an inorganic acid (e.g., nitric acid) to produce the carboxylic acid.

The epoxy-functional polyethers of the invention are produced by reacting the carboxylic acid described above with a hydrophobic epoxy resin. Generally, the epoxy resin can be any reactive epoxy resin having a 1,2-epoxy equivalency (functionality) preferably, on the average, greater than about 1.5 epoxide groups per molecule. The epoxy resin can be saturated or unsaturated, linear or branched, aliphatic, cycloaliphatic, aromatic or heterocyclic, and may bear substituents which do not materially interfere with the reaction with the carboxylic acid. Such substituents can include bromine or fluorine. They may be monomeric or polymeric, liquid or solid, but are preferably liquid or a low melting solid at room temperature. Suitable epoxy resins include glycidyl ethers prepared by reacting epichlorohydrin with a compound containing at least 1.5 aromatic hydroxyl group carried out under alkaline reaction conditions. Examples of other epoxy resins suitable for use in the invention include diglycidyl ethers of dihydric compounds, epoxy novolacs and cycloaliphatic epoxies. Generally epoxy resins contain a distribution of compounds with a varying number of 1,2-epoxy equivalency.

Preferred epoxy resins include, but are not limited to, those represented by the formula: 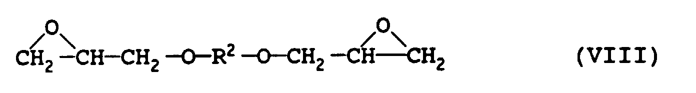 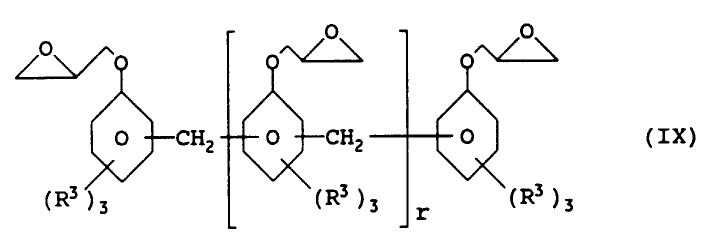 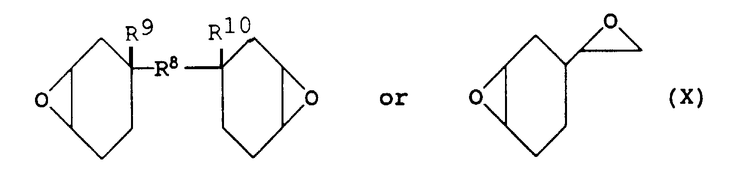 wherein r is a real number from 0 to 6, R² is divalent aliphatic, divalent cycloaliphatic or divalent arylaliphatic group, preferably R² contains 8 to 120 carbon atoms, R³ is independently a hydrogen or a C₁-C₁₀ alkyl group, R⁸ is a divalent aliphatic group optionally containing ether or ester group(s) or together with R⁹ or R¹⁰ form a spiro ring optionally containing heteroatoms, and R⁹ and R¹⁰ are independently hydrogen or R⁹ or R¹⁰ together with R⁸ form a spiro ring optionally containing heteroatoms such as oxygen, preferably R⁸ contains about 1 to 20 carbon atoms. R² can be a divalent cycloaliphatic group having the formula: 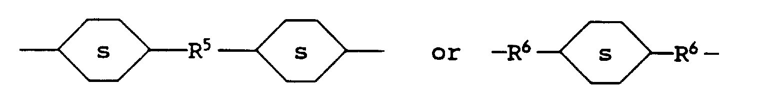 wherein R⁵ and R⁶ are each independently an alkylene group, or a divalent arylaliphatic group having the formula: 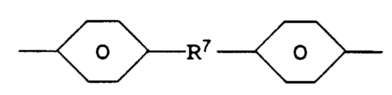 wherein R⁷ is an alkylene group.

Preferably the epoxy resin is a diglycidyl ether of a dihydric phenol, diglycidyl ether of a hydrogenated dihydric phenol, an aliphatic glycidyl ether, epoxy novolac or a cycloaliphatic epoxy.

Diglycidyl ethers of dihydric phenols can be produced, for example, by reacting an epihalohydrin with a dihydric phenol in the presence of an alkali. Examples of suitable dihydric phenols include: 2,2-bis(4-hydroxyphenyl)propane (bisphenol-A); 2,2-bis (4-hydroxy-3-tertbutylphenyl)propane; 1,1-bis(4-hydroxyphenyl)ethane; 1,1-bis (4-hydroxyphenyl) isobutane; bis(2-hydroxy-1-naphthyl)methane; 1,5-dihydroxynaphthalene; 1,1-bis(4-hydroxy-3-alkylphenyl)ethane and the like. Suitable dihydric phenols can also be obtained from the reaction of phenol with aldehydes such as formaldehyde (bisphenol-F). Diglycidyl ethers of dihydric phenols includes advancement products of the above diglycidyl ethers of dihydric phenols with phenolic compounds such as bisphenol-A, such as those described in U.S. Patent Nos. 3,477,990 and 4,734,468.

Diglycidyl ethers of hydrogenated dihydric phenols can be produced, for example, by hydrogenation of dihydric phenols followed by glycidation with epihalohydrin in the presence of a Lewis acid catalyst and subsequent formation of the glycidyl ether by reaction with sodium hydroxide. Examples of suitable dihydric phenols are listed above.

Aliphatic glycidyl ethers can be produced, for example, by reacting an epihalohydrin with an aliphatic diol in the presence of a lewis acid catalyst followed by conversion of the halohydrin intermediate to the glycidyl ether by reaction with sodium hydroxide. Examples of preferred aliphatic glycidyl ethers include those corresponding to the formulas: 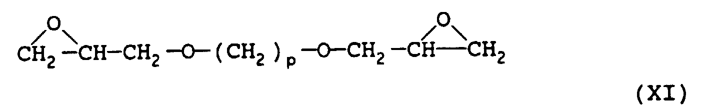 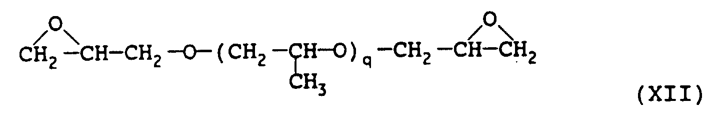 wherein:
p is an integer from 2 to 12, preferably from 2 to 6; and
q is an integer from 4 to 24, preferably from 4 to 12.

Examples of suitable aliphatic glycidyl ethers include for example, diglycidyl ethers of 1,4 butanediol, neopentyl glycol, cyclohexane dimethanol, hexanediol, polyproplene glycol, and like diols and glycols; and triglycidyl ethers of trimethylol ethane and trimethylol propane.

Epoxy novolacs can be produced by condensation of formaldehyde and a phenol followed by glycidation by epihalohydrin in the presence of an alkali. The phenol can be for example, phenol, cresol, nonylphenol and t-butylphenol. Examples of the preferred epoxy novolacs include those corresponding to the formula: 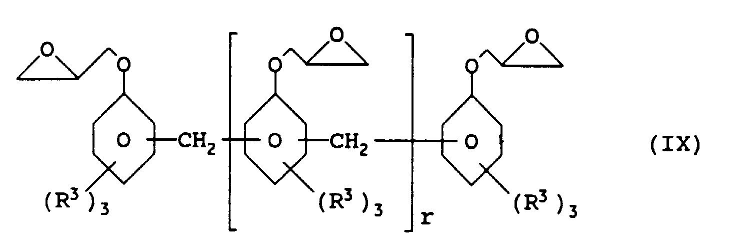 wherein R³ is independently a hydrogen or a C₁-C₁₀ alkyl group and r is a real number from about 0 to about 6. Epoxy novolacs generally contain a distribution of compounds with a varying number of glycidated phenoxymethylene units, r. Generally, the quoted number of units is the number closest to the statistical average, and the peak of the distribution.

Cycloaliphatic epoxies can be produced by epoxidizing a cycloalkene-containing compound with greater then one olefinic bond with peracetic acid. Examples of the preferred cycloaliphatic epoxies include those corresponding to the formula: 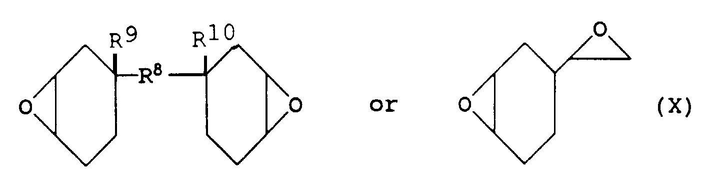 wherein R⁸ is a divalent aliphatic group optionally containing ether or ester group(s) or together with R⁹ or R¹⁰ form a spiro ring optionally containing heteroatoms, and R⁹ and R¹⁰ are independently hydrogen or R⁹ or R¹⁰ together with R⁸ form a spiro ring optionally containing heteroatoms such as oxygen, preferably R⁸ contains from about 1 to about 20 carbon atoms. Examples of cycloaliphatic epoxies include, for example, 3,4-epoxycyclohexylmethyl-(3,4-epoxy)cyclohexane carboxylate, dicycloaliphatic diether diepoxy [2-(3,4-epoxy)cyclohexyl-5,5-spiro(3,4-epoxy)-cyclohexane-m-dioxane], bis(3,4-epoxy-cyclohexylmethyl)adipate, bis(3,4-epoxycyclohexyl)adipate and vinylcyclohexene dioxide [4-(1,2-epoxyethyl)-1,2-epoxycyclohexane]. Cycloaliphatic epoxies include compounds of the formulas:

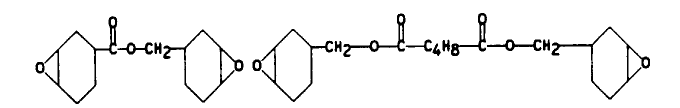

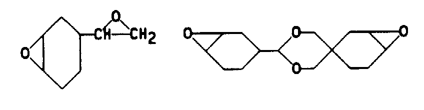

Commercial examples of preferred epoxy resins include, for example, EPON Resins DPL-862, 828, 826, 825, 1001, EPONEX Resin 1510, HELOXY Modifiers 107, 67, 68, and 32 (EPON, EPONEX and HELOXY are trademarks) all available from Shell Chemical Company and Baklite Epoxy Resin ERL-4221, -4289, -4299, -4234 and -4206 (Union Carbide).

The carboxylic acid is contacted with the epoxy resin under conditions effective to react the acid group and the epoxide group and to produce epoxy-functional polyethers represented by the formulas: 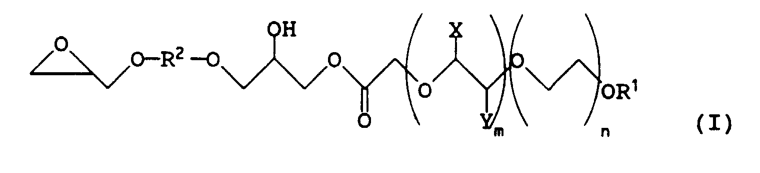 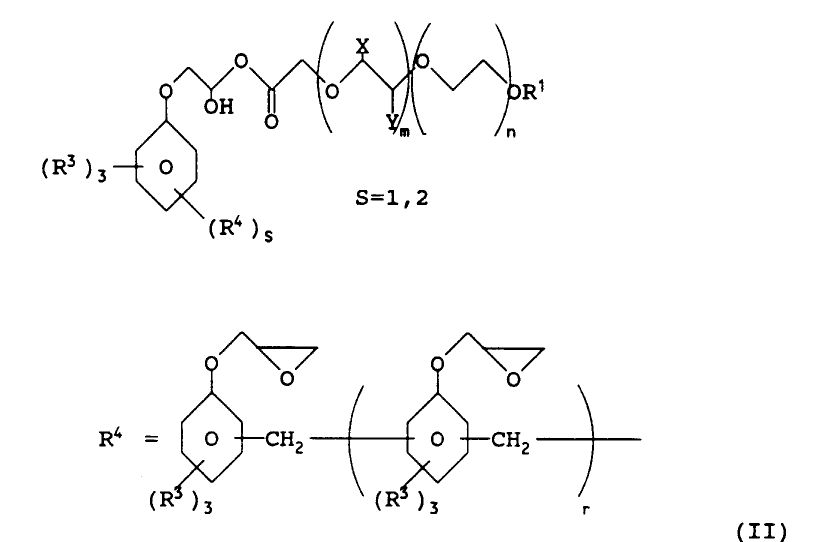 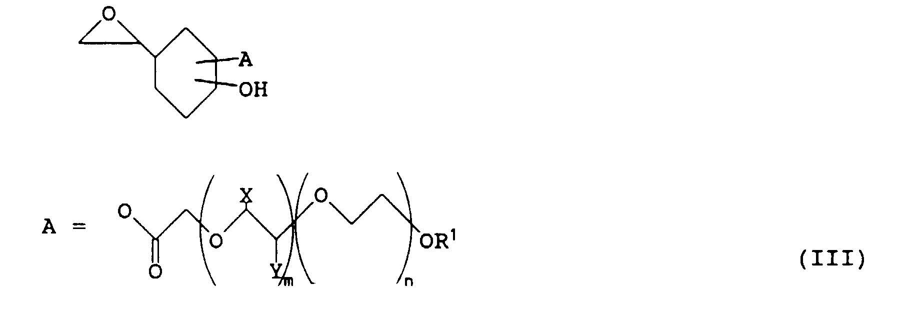 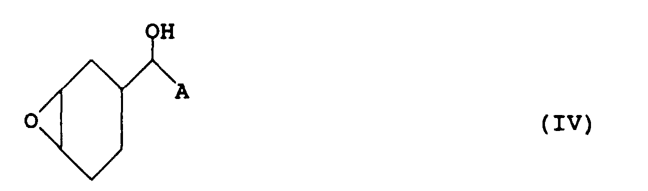 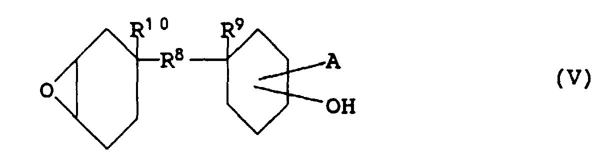 wherein R¹ is a C₁-C₁₅ alkyl, aryl or alkylaryl group, preferably methyl, ethyl, propyl, butyl or nonylphenyl, R² is a divalent aliphatic group, divalent cycloaliphatic group or a divalent arylaliphatic group, R³ is independently a hydrogen or a C₁-C₁₀ alkyl group, R⁸ is a divalent aliphatic group optionally containing ether or ester group(s) or together with R⁹ or R¹⁰ form a spiro ring optionally containing heteroatoms, and R⁹ and R¹⁰ are independently hydrogen or R⁹ or R¹⁰ together with R⁸ form a spiro ring optionally containing heteroatoms such as oxygen, r is a real number from 0 to 6, X and Y are independently hydrogen, methyl or ethyl group with the provision that if X is methyl, Y is hydrogen or if Y is methyl, X is hydrogen and n+m is a real number from 4 to 450. The location of the OH and A bonding to the cycloaliphatic ring represents the different isomers formed by the cycloaliphatic ring opening reaction. It can be appreciated that the acid A moiety can be attached to either para- or meta- position from R⁸ or epoxy moiety.

Typically, the mole ratio of the carboxylic acid to epoxy resin is within the range of 1:1 to 1:500, more preferably 1.0:1.3 to 1.0:200. The reaction is typically carried out at a temperature from ambient temperature to an elevated temperature sufficient to react the acid group and the epoxide group which is typically within the range of from 25 °C, preferably from 90 °C, to 150 °C, preferably to 120 °C for a time effective to produce the reaction products. The progress of the reaction can be monitored and targeted to produce the desired product by measuring the acid equivalent weight and the epoxy equivalent weight of the reactant mixture. Generally, the reaction mixture is heated until an acid equivalent weight of the mixture indicates greater or equal than 99% of the original number of equivalents of acid is consumed, and at least an equivalent amount of epoxies is consumed which is generally one hour or greater. For cycloaliphatic epoxies, the monitoring of the course of reaction by following consumption of epoxy alone can be misleading, due to competing homopolymerization of this type of epoxy group. Preferably, this reaction is carried out in the presence of an catalyst.

The reaction typically produces a product which contains at least one epoxide monoester and molecules which result from the condensation of two or more molecules of acid with one molecule of polyepoxide as well as unreacted epoxide depending on the mole or equivalent ratios of the epoxy resin to the carboxylic acid groups and the amount of time the reaction is allowed to proceed. Preferably, excess of the epoxy resin (mole ratio of the epoxy resin to carboxylic acid being greater than 1:1) is used to minimize the formation of the polyesterified species. If desired the epoxide monoester product or a mixture containing predominantly epoxide monoester product (epoxide monoester being the largest component in the mixture) can be recovered from the reaction mixture by conventional techniques.

The catalysts are bases or metal chelates such as, for example, ammonium compounds, phosphonium compounds, tertiary amines, and phosphines. Examples of more preferred catalysts include, for example, triphenylphosphonium acid acetate, ethyltriphenyl phosphonium iodide, benzyldimethylamine, triphenylphosphine, tributylamine, aluminum salicylates, tetramethylammonium hydroxide and the like. The amount of catalyst present is preferably from 0.1, more preferably from 0.25, to 2.0, more preferably to about 0.5 weight percent based on the total weight of the epoxy resin and the carboxylic acid.

Examples 1-3 demonstrate the preparation of the hydrophilic carboxylic acids. Examples 4-11 demonstrate the preparation of the epoxy-functional polyethers of the invention.

Polyethylene glycol monomethylethers (PEGMME) used in the examples below were obtained from Aldrich Chemical Co. 2,2,6,6-tetramethyl-1-piperidinyloxy (TEMPO) used in the examples below was obtained from Aldrich Chemical Co. EPON Resin 828 (a diglycidyl ether of dihydric phenol having epoxy equivalent weight of 187-188) and EPONEX Resin 1510 (a diglycidyl ether of a hydrogenated dihydric phenol having epoxy equivalent weight of 220) were obtained from Shell Chemical Company. HELOXY Modifier 67 (a diglycidyl ether of butanediol having an epoxy equivalent weight of 333) and HELOXY Modifier 32 (a diglycidyl ether of polypropylene glycol 400 having an epoxy equivalent weight of 305-335) were obtained from Shell Chemical Company. 25% active aluminum salicylate was obtained from Rhone Poulenc Marichem Inc.

### EXAMPLE 1

### Preparation of alpha-(2-carboxymethyl)-omega-methoxy-. poly(oxy-1,2-ethanediyl)

A solution of polyethylene glycol monomethylether having an average molecular weight of 550 and carbon tetrachloride was prepared by placing 500g of PEGMME and 1000g of carbon tetrachloride into a 2000mL four neck flask equipped with a stirrer, condenser, temperature probe, gas dispersion tube and an addition funnel. The solution was stirred and heated to 60 °C. 28.4 g of TEMPO free radical was then added and oxygen was bubbled into the solution at approximately 50 mL/minute. Then to this solution 25.6g of concentrated nitric acid was added over 14 minutes. After the addition, oxygen was added for eight more hours. Solvent was removed by rotary evaporation. The acid equivalent weight of the product determined by titration was 663. The product analyzed by ¹³C NMR was completely converted from hydroxyl to carboxylic acid. The equivalent weight of the product was estimated to be 557. To 100g of product 25g of isopropanol and 100g of water was added and stirred for 30 minutes. Volatiles were removed by rotary evaporation. The acid equivalent weight of the purified material was 632.

### EXAMPLE 2

### Preparation of alpha-(2-carboxymethyl)-omega-methoxy-. poly(oxy-1,2-ethanediyl)

To a 100 mL flask, fitted with a stirring bar, thermocouple, air sparge tube, condenser and addition funnel, was added 16 grams (0.0.0032 equiv.) of polyethylene glycol monomethyl ether of approximately 5000 Mn (Aldrich Chemical Co.), 1 gram (0.0064 equiv) of 2,2,6,6-tetramethyl-1-piperidinyloxy free radical (Aldrich Chemical Co., TEMPO, free radical), 1 gram of Aliquat 336 (Aldrich Chemical Co.) and 25 mL of acetonitrile. Gaseous oxygen (Alphagaz, pure) was bubbled into the mixture, which was warmed to 35 °C and maintained at that temperature for 5 hours. Volatiles were then removed at 30 °C by rotary evaporation. The residue was dissolved in 25mL of water and the pH of the solution adjusted to 3.1 with 2.5 mL of 10% sodium hydroxide. This was then extracted with heptane. Denatured alcohol was added to the aqueous layer, and the mixture rotovapped at 30 °C. The product (18.85 g) was isolated as a waxy solid.

### EXAMPLE 3

### Preparation of alpha-(2-carboxymethyl)-omega-methoxy-. poly(oxy-1,2-ethanediyl)

To a 3000mL, four neck flask, fitted with a stirrer, thermocouple, air sparge tube, condenser and addition funnel, was added 500 grams (0.1 equiv.) of polyethylene glycol monomethyl ether of approximately 5000 Mn(Aldrich Chemical Co.),15.6 grams (0.1 equiv) of 2,2,6,6-tetramethyl-1-piperidinyloxy, free radical(Aldrich Chemical Co., TEMPO, free radical) and 1000 grams of dichloromethane. The mixture was heated to reflux, then air was introduced into the mixture through the sparge tube. Next, concentrated nitric acid (15.6 grams) was then added over 15 minutes and the mixture was held at reflux for 15 hours. Volatiles were then removed by means of a rotary evaporator. The residue solidified upon cooling. It was ground to a powder, washed with 2-propanol and dried in a vacuum oven at 40 °C to constant weight. NMR Analysis confirmed conversion of hydroxyl to carboxyl functionality. The solid possessed an acid equivalent weight of 4643.

### EXAMPLE 4

### Preparation of a epoxy-functional polyethers with HELOXY Modifier 32.

Into a 500mL, 4-neck flask equipped with a stirrer, condenser and a temperature probe, 126.4g of the carboxylic acid from Example 1 having equivalent weight of 632, 133.2g of HELOXY Modifier 32 and 0.65g of ethyltriphenylphosphonium iodide were placed. The content was warmed to 120 °C under positive nitrogen pressure and maintained until the acid equivalent weight (AEW) of the mixture exceeded 50,000 and the weight per epoxide (WPE) exceeded 1301. After four hours, the product had a WPE of 1379 and AEW of 91,700. Average number of n was 12.

### EXAMPLE 5

### Preparation of a epoxy-functional polyethers with HELOXY Modifier 32.

50.0 grams (1.3 moles) of HELOXY Modifier 32 was heated to 93°C (200°F) and to it were added 8.32 grams (1.0 moles) of the carboxylic acid from Example 2 and 0.58 grams of a 25% active solution of aluminum salicylate catalyst. This mixture was held at 93°C (200 °F) with good mixing for 4 hours. At this point the resulting brown solid had an acid value of <1 and a measured epoxy equivalent weight of 3,409. The M_{W} was determined to be 12,500. n was approximately 112.

### EXAMPLE 6

### Preparation of a epoxy-functional polyethers with EPONEX Resin 1510.

The same procedure as outlined in Example 4 was used, except 88.0g of EPONEX Resin 1510 was used instead of HELOXY Modifier 32 and 0.54g of ethyltriphenylphosphonium iodide was used. The content was warmed until the AEW exceeded 1072. The product had a WPE of 1110 ad WPE of 52,467. n had an average value of 12.

### EXAMPLE 7

51.17 grams (2.12 moles) of EPONEX Resin 1510 , 50.25 grams (1.0 moles) of the carboxylic acid from Example 1 and 1.01 grams of a 25% solution of aluminum salicylate catalyst were allowed to react while mixing at 65-70 °C for 5 hours. Then an additional 32.3 grams of EPONEX Resin 1510 was added and the mixture was allowed to react an additional 72 hours at 65 °C. The viscosity of the adduct was 39,600 centipoise at 25 °C. The acid value was <1 and the equivalent weight epoxy was determined to be 493. The M_{W} was 3,270. n had an average value of 12.

### EXAMPLE 8

### Preparation of an epoxy-functional polyethers with EPON Resin 828.

Into a 100mL, 4-neck flask, fitted with a stirrer, condenser and a thermocouple, was added 39.46 g of the carboxylic acid of Example 2 and 18.67 g of EPON Resin 828. The mixture was warmed under nitrogen atmosphere to 80°C to effect dissolution, then 0.3 g of tetrabutylammonium bromide was added. The mixture was warmed further to 110 °C and maintained at that temperature until the WPE of the mixture was 706 and the acid equivalent weight exceeded 300,000; whereupon the mixture was isolated and allowed to cool.

### EXAMPLE 9

### Preparation of an epoxy-functional polyethers with D.E.N. 438 (D.E.N. is a trademark).

To a 100 mL , three neck flask equipped with a magnetic stirring bar, condenser, temperature probe and nitrogen seal was added 37.15 g (0.008 equivalent) of the acid-functional polyether from Example 3, 18.1 grams-(0.1equiv.) of D.E.N. 438 (an epoxy phenolic novolac available from Dow Chemical Co.) and 0.28 gram of tetramethylammonium bromide. This mixture was warmed to 140 °C until the epoxide equivalent weight(WPE) of the mixture exceeded 603. After 22 minutes of heating at 100-140 °C, the WPE of the mixture was 611. The surfactant containing composition was isolated by pouring the contents of the flask into an aluminum pan and allowing it to cool.

### EXAMPLE 10

### Preparation of a epoxy-functional polyethers with EPONEX Resin 1510.

To a 100 mL, three neck flask equipped with a magnetic stirring bar, condenser, temperature probe and nitrogen seal was added 37.15 g (0.008 equivalent) of the acid-functional polyether from Example 3, 15.9 grams-(0.1equiv.) of EPONEX Resin 1510 and 0.28 gram of tetramethylammonium bromide. This mixture was warmed to 140 °C until the epoxide equivalent weight (WPE) of the mixture exceeded 651. After 51 minutes of heating at 100-140 °C, the WPE of the mixture was 653. The surfactant containing composition was isolated by pouring the contents of the flask into an aluminum pan and allowing it to cool.

### EXAMPLE 11

### Preparation of a epoxy-functional polyethers with HELOXY Modifier 67.

Into 53.10 grams (1.3 moles) of HELOXY Modifier 67 were mixed 0.75 grams of the 25% active, alcoholic aluminum salicylate catalyst. This blend was heated to 116 °C and to it was added 96.15 grams of the carboxylic acid from Example 1 over 1 hour. The reaction was allowed to continue at his temperature for 5 hours after which the epoxide equivalent weight was measured to be 587 and the acid equivalent weight was greater than 60,000. The M_{W} was determined to be 1210 by GPC. n had an average value of 12.

## Claims

1. An aqueous epoxy resin composition comprising an epoxy resin and as emulsifier and/or reactive diluent an epoxy-functional polyether produced by reacting (a) a carboxylic acid having the formula: 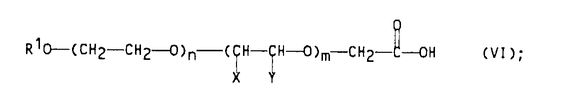 wherein R¹ is a C₁-C₁₅ alkyl, aryl or alkylaryl and X and Y are independently a hydrogen, methyl or ethyl group with the provision that if X is methyl or ethyl, Y is hydrogen or if Y is methyl or ethyl, X is hydrogen and n+m is a real number from about 4 to about 450 and (b) an epoxy resin having a functionality of at least about 1.5 epoxide group per molecule in a carboxylic acid to epoxy resin mole ratio of from 1:1 to 1:500.

2. The aqueous epoxy resin composition of claim 1, wherein n+m is a real number from 10 to 400, R¹ is selected from the group consisting of methyl, ethyl, propyl, butyl, and nonylphenyl, especially a methyl yroup, and the carboxylic acid to epoxy resin mole ratio is from about 1.0:1.3 to about 1:200.

3. The aqueous epoxy resin composition of claims 1 and 2 wherein the epoxy resin reactant (b) is a hydrophobic epoxy resin.

4. The aqueous epoxy resin composition of claims 1 and 2, wherein the epoxy resin reactant (b) has the formula 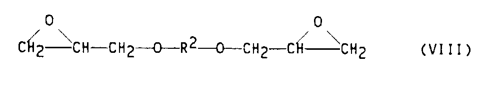 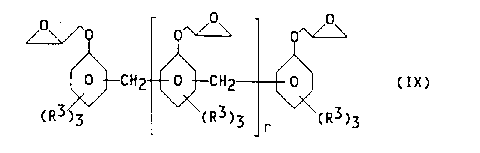 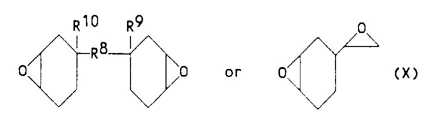 wherein r is a real number from about 0 to about 6, R₂ is divalent aliphatic, divalent cycloaliphatic or divalent arylaliphatic group, R³ is independently a hydrogen or a C₁-C₁₀ alkyl group, R⁸ is a divalent aliphatic group optionally containing ether or ester group(s) or together with R⁹ or R¹⁰ form a spiro ring optionally containing heteroatoms, and R⁹ and R¹⁰ are independently hydrogen or R⁹ or R¹⁰ together with R⁸ form a spiro ring optionally containing heteroatoms such as oxygen.

5. The aqueous epoxy resin composition of claim 1, wherein the epoxy resin reactant (b) is a diglycidyl ether of a dihydric phenol, a diglycidyl ether of a hydrogenated dihydric phenol, an aliphatic glycidyl ether or an epoxy novolac.

6. The aqueous epoxy resin composition of claim 5 wherein the epoxy resin reactant (b) has a formula: 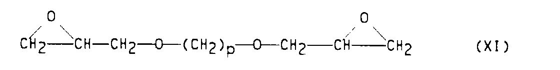 wherein p is an integer from 2 to 12, or a formula: 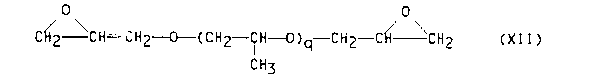 wherein q is an integer from 4 to 24.

7. An aqueous coating composition, comprising a composition of claims 1-6.

8. A method for producing an epoxy-functional polyether comprising reacting (a) a carboxylic acid having the formula: 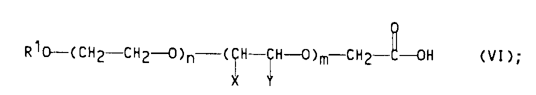 wherein R¹ is a C₁-C₁₅ alkyl, aryl or alkylaryl and X and Y are independently a hydrogen, methyl or ethyl group with the provision that if X is methyl or ethyl, Y is hydrogen or if Y is methyl or ethyl, X is hydrogen and n+m is a real number from 4 to 450 and (b) an epoxy resin having a functionality of at least 1.5 epoxide group per molecule in a carboxylic acid to epoxy resin mole ratio of from 1:1 to 1:500 at a temperature within the range of 25 °C to 150 °C in the presence of a base or a metal chelate.

## Patentansprüche

1. Wäßrige Epoxyharzzusammensetzung, umfassend ein Epoxyharz und als Emulgator und/oder reaktives Verdünnungsmittel einen epoxyfunktionellen Polyether, hergestellt durch Umsetzen (a) einer Carbonsäure mit der Formel: 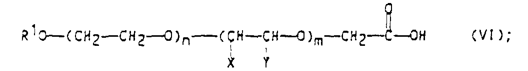 worin R¹ ein C₁-C₁₅Alkyl, Aryl oder Alkylaryl ist und X und Y unabhängig eine Wasserstoff-, Methyl- oder Ethylgruppe darstellen, mit der Maßgabe, daß dann, wenn X für Methyl oder Ethyl steht, Y Wasserstoff bedeutet oder dann, wenn Y Methyl oder Ethyl ist, X Wasserstoff bedeutet und n+m eine reale Zahl von etwa 4 bis etwa 450 bedeutet, mit (b) einem Epoxyharz mit einer Funktionalität von wenigstens etwa 1,5 Epoxidgruppen pro Molekül bei einem Molverhältnis von Carbonsäure zu Epoxyharz von 1:1 bis 1:500.

2. Wäßrige Epoxyharzzusammensetzung nach Anspruch 1, worin n+m eine reale Zahl von 10 bis 400 ist, R¹ aus der aus Methyl, Ethyl, Propyl, Butyl und Nonylphenyl bestehenden Gruppe ausgewählt ist, insbesondere eine Methylgruppe ist, und das Molverhältnis Carbonsäure zu Epoxyharz von etwa 1,0:1,3 bis etwa 1:200 beträgt.

3. Wäßrige Epoxyharzzusammensetzung nach den Ansprüchen 1 und 2, worin die Epoxyharzreaktionskomponente (b) ein hydrophobes Epoxyharz ist.

4. Wäßrige Epoxyharzzusammensetzung nach den Ansprüchen 1 und 2, worin die Epoxyharzreaktionskomponente (b) die Formel: 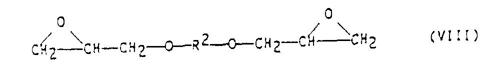 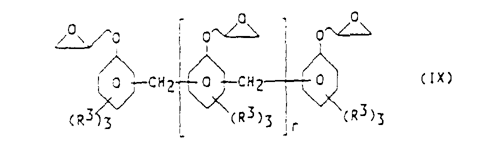 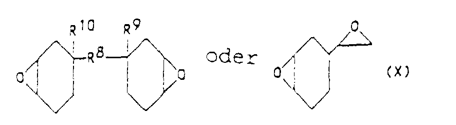 hat, worin r eine reale Zahl von etwa 0 bis etwa 6 ist, R² eine zweiwertige aliphatische, zweiwertige cycloaliphatische oder zweiwertige arylaliphatische Gruppe bedeutet, R³ unabhängig eine Wasserstoff- oder eine C₁-C₁₀Alkylgruppe bedeutet, R⁸ eine zweiwertige aliphatische Gruppe ist, die gegebenenfalls Ether- oder Estergruppe(n) enthält oder zusammen mit R⁹ oder R¹⁰ einen Spiroring ausbildet, der gegebenenfalls Heteroatome enthält, und R⁹ und R¹⁰ unabhängig Wasserstoff bedeuten oder R⁹ oder R¹⁰, zusammen mit R⁸, einen Spiroring ausbilden, der gegebenenfalls Heteroatome wie Sauerstoff enthält.

5. Wäßrige Epoxyharzzusammensetzung nach Anspruch 1, worin die Epoxyharzreaktionskomponente (b) ein Diglycidylether eines zweiwertigen Phenols, ein Diglycidylether eines hydrierten zweiwertigen Phenols, ein aliphatischer Glycidylether oder ein Epoxynovolak ist.

6. Wäßrige Epoxyharzzusammensetzung nach Anspruch 5, worin die Epoxyharzreaktionskomponente (b) eine Formel: 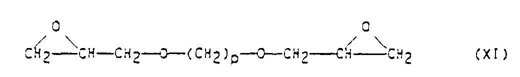 aufweist, worin p eine ganze Zahl von 2 bis 12 bedeutet, oder eine Formel: 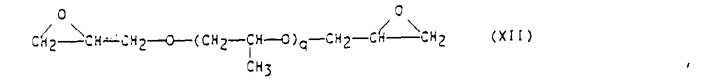 aufweist, worin q eine ganze Zahl von 4 bis 24 ist.

7. Wäßrige Beschichtungszusammensetzung, umfassend eine Zusammensetzung nach den Ansprüchen 1-6.

8. Verfahren zur Herstellung eines epoxyfunktionellen Polyethers, umfassend das Umsetzen (a) einer Carbonsäure mit der Formel: 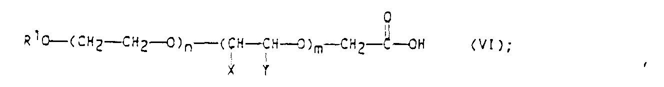 worin R¹ ein C₁-C₁₅Alkyl, Aryl oder Alkylaryl bedeutet und X und Y unabhängig eine Wasserstoff-, Methyl- oder Ethylgruppe bedeuten, mit der Maßgabe, daß dann, wenn X für Methyl oder Ethyl steht, Y Wasserstoff bedeutet oder dann, wenn Y für Methyl oder Ethyl steht, X Wasserstoff bedeutet und n+m eine reale Zahl von 4 bis 450 ist, mit (b) einem Epoxyharz mit einer Funktionalität von wenigstens 1,5 Epoxidgruppen pro Molekül bei einem Molverhältnis von Carbonsäure zu Epoxyharz von 1:1 bis 1:500 bei einer Temperatur im Bereich von 25°C bis 150°C in Gegenwart einer Base oder eine Metallchelats.

## Revendications

1. Composition de résine époxy aqueuse comprenant une résine époxy et, à titre d'émulsif et/ou de diluant réactif, un polyéther époxy-fonctionnel obtenu par la réaction (a) d'un acide carboxylique répondant à la formule : 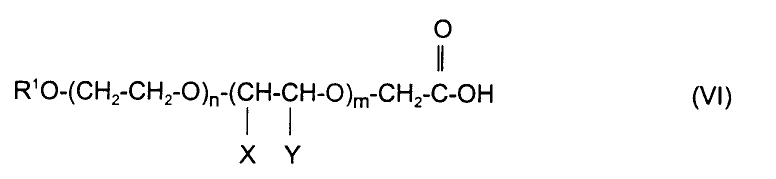 dans laquelle R¹ représente un radical alkyle en C₁ à C₁₅, aryle ou alkylaryle et X et Y représentent chacun indépendamment un atome d'hydrogène, un radical méthyle ou éthyle, avec la condition que lorsque X représente un radical méthyle ou éthyle, Y représente un atome d'hydrogène, ou que lorsque Y représente un radical méthyle ou éthyle, X représente un atome d'hydrogène et n+m est un nombre réel qui varie d'environ 4 à environ 450 et (b) une résine époxy possédant une fonctionnalité d'au moins environ 1,5 groupe époxyde par molécule, dans un rapport molaire acide carboxylique à résine époxy de 1:1 à 1:500.

2. Composition de résine époxy aqueuse suivant la revendication 1, caractérisée en ce n+m est un nombre réel de 10 à 400, R¹ est choisi dans le groupe formé par les radicaux méthyle, éthyle, propyle, butyle et nonylphényle, plus particulièrement, le radical méthyle et le rapport molaire de l'acide carboxylique à la résine époxy varie d'environ 1,0:1,3 à environ 1:200.

3. Composition de résine époxy aqueuse suivant les revendications 1 et 2, caractérisée en ce que le réactif à base de résine époxy (b) est une résine époxy hydrophobe.

4. Composition de résine époxy aqueuse suivant les revendications 1 et 2, caractérisée en ce que le réactif à base de résine époxy (b) possède la formule suivante : 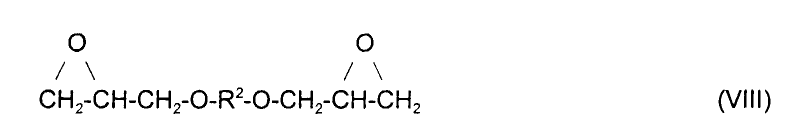 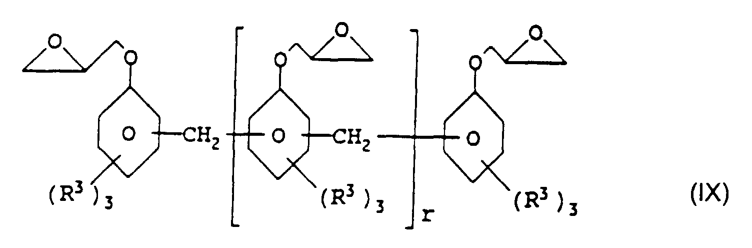 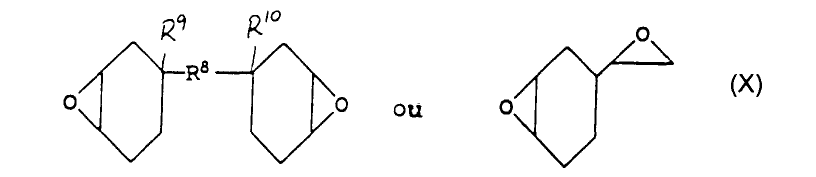 dans laquelle r est un nombre réel qui varie de 0 à 6, R² est un groupe aliphatique bivalent, un groupe cycloaliphatique bivalent, ou un groupe arylaliphatique bivalent, R³ représente indépendamment un atome d'hydrogène ou un radical alkyle en C₁ à C₁₀, R⁸ représente un groupe aliphatique bivalent qui contient éventuellement un ou plusieurs groupes ester ou éther, ou bien considéré ensemble avec R⁹ ou R¹⁰, il forme un cycle spiro contenant éventuellement des hétéroatomes, et R⁹ et R¹⁰ représentent chacun indépendamment un atome d'hydrogène, ou bien R⁹ ou R¹⁰ ensemble avec R⁸ forment un cycle spiro contenant éventuellement des hétéroatomes, tels que l'oxygène.

5. Composition de résine époxy aqueuse suivant la revendication 1, caractérisée en ce que le réactif à base de résine époxy (b) est un éther diglycidylique d'un phénol dihydroxylé, un éther diglycidylique d'un phénol dihydroxylé hydrogéné, un éther glycidylique aliphatique, ou une résine époxy novolaque.

6. Composition de résine époxy aqueuse suivant la revendication 5, caractérisée en ce que le réactif à base de résine époxy (b) répond à la formule : 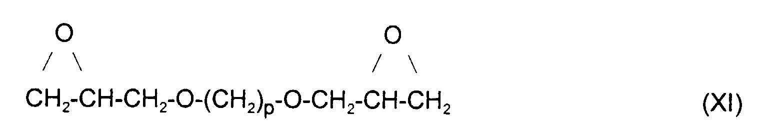 dans laquelle p est un nombre entier dont la valeur varie de 2 à 12, ou à la formule : 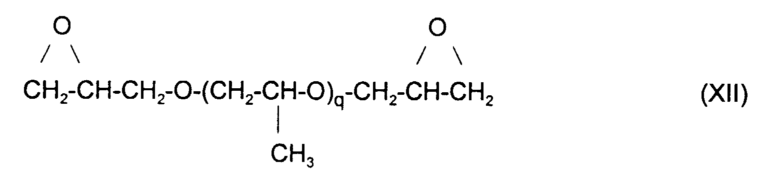 dans laquelle q est un nombre entier dont la valeur varie de 4 à 24.

7. Composition de revêtement aqueuse comprenant une composition suivant l'une quelconque des revendications 1 à 6.

8. Procédé de production d'un polyéther époxy-fonctionnel, caractérisé en ce que l'on fait réagir (a) un acide carboxylique répondant à la formule : 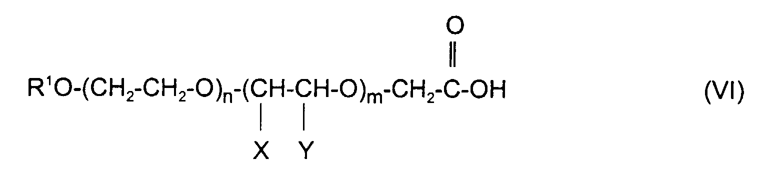 dans laquelle R¹ représente un radical alkyle en C₁ à C₁₅, aryle ou alkylaryle et X et Y représentent chacun indépendamment un atome d'hydrogène, un radical méthyle ou éthyle, avec la condition que lorsque X représente un radical méthyle ou éthyle, Y représente un atome d'hydrogène, ou que lorsque Y représente un radical méthyle ou éthyle, X représente un atome d'hydrogène et n+m est un nombre réel qui varie d'environ 4 à environ 450 et (b) une résine époxy possédant une fonctionnalité d'au moins environ 1,5 groupe époxyde par molécule, dans un rapport molaire acide carboxylique à résine époxy de 1:1 à 1:500, à une température comprise dans la plage de 25°C à 150°C et en présence d'une base ou d'un chélate de métal.
